**Europäisches Patentamt**

**European Patent Office** (11) Publication number: **0 144 042**

**Office européen des brevets** **A2**

(12) # EUROPEAN PATENT APPLICATION

(21) Application number: **84114087.4** (51) Int. Cl.⁴: **H 04 M 11/06**

(22) Date of filing: **22.11.84**

(30) Priority: **30.11.83 US 556313**

(43) Date of publication of application:
**12.06.85 Bulletin 85/24**

(84) Designated Contracting States:
**CH DE FR GB IT LI NL SE**

(71) Applicant: **CYGNET TECHNOLOGIES, INC.**
**1296 Lawrence Station Road**
**Sunnyvale California 94086(US)**

(72) Inventor: **Presuhn, Randy**
**1800 Stokes Apt. 170**
**San Jose California 95126(US)**

(72) Inventor: **Kerman, Stephen**
**229 Luther Drive**
**Southbury Connecticut 06488(US)**

(74) Representative: **Reinländer & Bernhardt Patentanwälte**
**Orthstrasse 12**
**D-8000 München 60(DE)**

(54) **A method and an apparatus for maintaining digital communication in a single session.**

(57) In the present invention, a method and an apparatus is disclosed in which digital communication between two like apparatuses is maintained in a single session in the presence of interrupt signals. When an interrupt signal occurs in the communication medium, the apparatus is temporarily switched to a quiescent period in which either transmission is ceased or transmission occurs over an energy band which is not detectable by the like apparatus as a carrier signal. The apparatuses then reconnect and resume the "handshake" as if the session has just commenced. After the "handshake" protocol, digital communication is resumed.

FIG. 1.

EP 0 144 042 A2

Croydon Printing Company Ltd.

## Description

## A Method And An Apparatus For Maintaining Digital Communication In A Single Session

### Technical Field

The present invention relates to a communication apparatus and a method for transmitting and receiving data signals to and from a communication medium in a single session in the presence of electrical noise on the medium. More particularly, the present invention relates to a telephonic apparatus which can maintain digital communication with a like apparatus in a single session in the presence of interrupt signals.

### Background Of The Invention

The transmission and reception of digital data signals to and from a communication medium has typically been accomplished by the use of a modem. A modem is a device which modulates the digital signal, i.e., converts the digital signal to an analog signal for transmission along the communication medium and demodulates or converts the analog signal received from the communication medium into a digital signal. The modem, in turn, is supplied with digital data from a computer or other source of digital data. Various patents disclose or teach the use of a modem with a computer to transmit and to receive digital data signals to and from a communication medium. See, for example, U.S. Patent Nos. 3,825,905; 4,040,014; 4,085,449 and 4,232,293.

U.S. patent No. 4,378,470 discloses an interface circuit for connection to non-dedicated telephone lines for a telephonic apparatus and a modem.

Modems of the prior art transmit data signals to one another over a carrier signal. The carrier signal for a modem of an originating party, _i.e._, the party that has initially placed the call, is different from the carrier signal generated by an answering party, the party to whom the call has been placed. Each modem can detect the carrier signal generated by the other party. Initially when an originating party places a call, the modem of the answering party will generate a first carrier signal in response thereto, which is transmitted to the modem of the originating party. The modem of the originating party, upon detection of this carrier signal, will then respond by transmitting to the modem of the answering party with a different carrier signal. For the 300 baud modem, these steps constitute the "hand shake" and the modems know that they are connected to one another. Thereafter, the transmission and reception of data signals can commence.

Modems of the prior art have been designed to withstand interrupt signals in the communication medium having relatively short durations. Typically, electrical noises, such as "clicks" and "pops" having duration of less than 20 msec can be tolerated by modems of the prior art. A typical prior art technique that tolerates such electrical noises is the use of a capacitor which times out its charge. If energy is resumed, i.e., detected by the modem before the capacitor has been fully discharged, then the modem will continue communicating with the other modem. Of course, data may be garbled and have error. However, this is a way of maintaining communication in a single session. A single session is defined as the time period that commences when an originatng party has placed the call to an answering party and communicates with that party and then terminates the call.

In the prior art, microprocessors have also been used with modems to tolerate longer periods of interruptions. Typically, these interruptions occur on the order of greater than 20 msec and less than 1 sec. If energy is detected after 20 msec of interrupted signal, the energy from the other modem is analyzed to see if there is data. For example, for the 212 type modem (transmission and reception at 1200 baud) continuous scramble marks for 150 msec is checked. If there is, then the modems would continue to communicate one another.

However, with both of these types of apparatuses to maintain communication in a single session, if the interrupt signal is of long enough duration, e.g. greater than one (1) second then the modem simply disconnects itself from the central office telephone line or the communication medium. In which event, the user, either the originating party or the answering party, must then redial the other party and reconnect the session.

In a typical office setting, PBX's or private branch exchanges are used. PBX's are well known in the art and are telephony switching devices interposed between the telephony apparatus and the central office telephone lines. The use of a PBX permits many telephony apparatuses to access a limited number of telephone lines. In addition, a PBX also permits various telephony apparatuses connected thereto to communicate with one another without accessing the central office lines. Moreover, a PBX can also signal a station when a call is waiting or there is a "camp-on" while the telephony apparatus of that station is in use. Typically, such a signal is in the form of an interrupt signal which can last longer than one second, in which the PBX temporarily disconnects the current call and inserts the interrupt signal. Thus, such an interrupt signal affects the call in progress.

## Summary Of The Invention

In the present invention, a method and an apparatus for maintaining digital communication in a single session with another digital apparatus via a communication medium is disclosed. The apparatus has a modem for transmitting and receiving data signals to and from the other digital apparatus. The modem receives data signals on a first carrier signal and transmits data signals on a second carrier signal to the other digital apparatus. A suppressing means causes the modem to transmit energy to the other digital apparatus which is not detectable by the other digital apparatus as a carrier signal. A computer detects the receipt of the first carrier signal detected by the modem and controls the modem and the suppressing means. In the event of the detection of a cessation in the first carrier signal, the computer automatically activates the suppressing means, waits a predetermined period of time, and deactivates the suppressing means. In addition, the computer causes the modem to transmit the second carrier signal to re-establish communication.

## Brief Description Of The Drawings

Fig. 1, is a perspective view of the apparatus of the present invention with a computer.

Fig. 2 is a block diagram of the apparatus of the present invention.

Fig. 3 is a block diagram of a portion of the diagram of Fig. 2 in greater detail.

Figs. 4-9 are circuit diagrams of the digital portion of the apparatus of the present invention.

Figs. 10a-10b are circuit diagrams of a type of modem which can be used in the apparatus of the present invention.

Figs. 11a-11d are circuit diagrams of another type of modem which can be used in the apparatus of the present invention.

Fig. 12 is a circuit diagram of the telephone interface of the apparatus of the present invention.

Fig. 13 is a schematic diagram of an example of the type of use for the apparatus of the present invention.

Detailed Description Of The Drawings

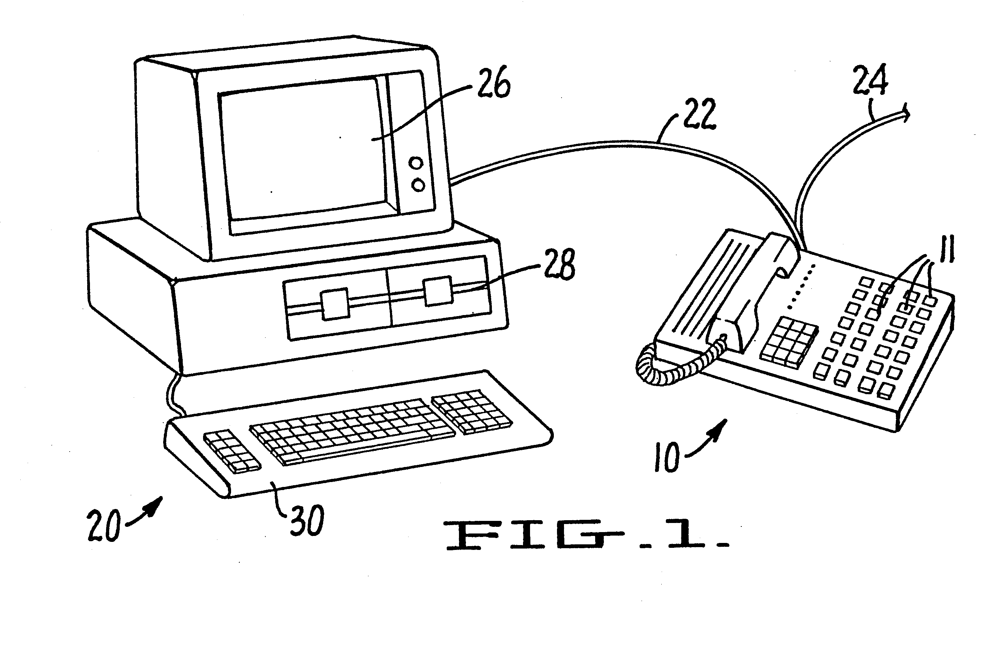

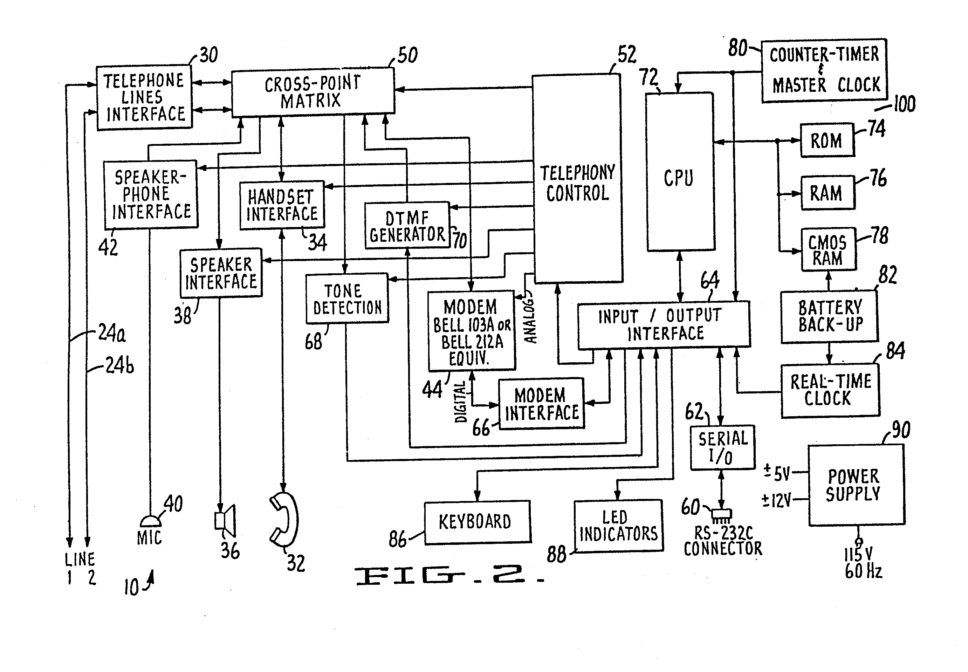

Referring to Fig. 1, there is shown an apparatus 10 of the present invention. The apparatus 10 is coupled to a computer system 20, via cables 22. The apparatus 10 is also coupled to telephone line 24 or lines 24a and 24b (as shown in Fig. 2).

The computer system 20 can be any type of computer. Preferably, the computer system 20 has a standard RS232C interface port. The cable 22 is connected between the RS232C port of the computer system 20 and with the apparatus 10. To the computer system 20, the apparatus 10 is treated as another peripheral device connected to the system 20. An example of a suitable computer system 20 is the IBM Personal Computer. The computer system 20 has a display screen 26, a mass storage device 28, such as a floppy disc, and a keyboard 30 for entry of input data. Memory and a microprocessor reside within the computer system 20.

The apparatus 10 receives digital data signals from the computer system 20 and provides digital data signals to the computer system 20. The apparatus 10 also communicates with the telephone line 24 and provides an analog signal to and from the telephone line 24.

Shown in greater detail in Fig. 2 is a block diagram of the apparatus 10 incorporating the present invention. The apparatus 10 comprises telephone line interface 30 for interfacing with telephone lines 24a and 24b. Although the embodiment shown in Fig. 2 shows two telephone lines, 24a and 24b, to which the apparatus 10 of the present invention is attached, the apparatus 10 of the present invention can also be used with one telephone line 24.

From the telephone line interface 30, the analog signals are supplied to a cross-point matrix 50, which will be discussed in greater detail hereinafter. A microphone 40 is connected through a microphone interface 42 to the cross-point matrix 50. A speaker 36 is connected through the speaker interface 38 to the cross-point matrix 50. A handset 32 is connected through the handset interface 34 to the cross-point matrix 50. The microphone 40, speaker 36 and the handset 32 provide analog voice signals to and from the apparatus 10; along with their respective interface units, these components are well known.

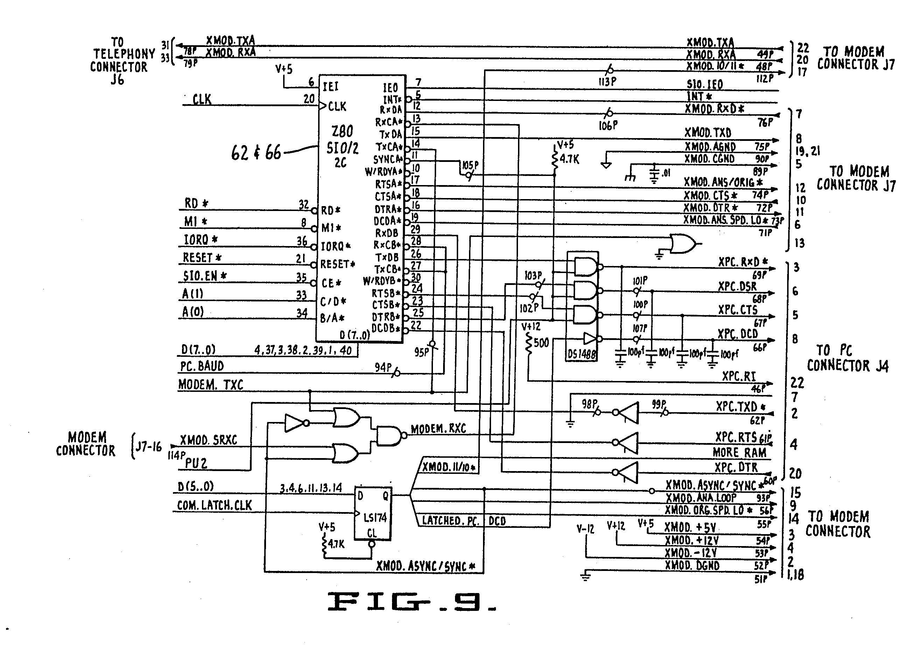

The digital data signals are supplied from the computer system 20 via cable 22 into the RS232C connector 60. The digital data signals are then passed through a serial input/output interface 62 and is supplied to an input/output interface 64. From the input/output interface 64, the digital data signals are passed through a modem interface 66, which can be another serial input/output interface. Thus, the input/output interface 62 and the modem interface 66 can be a 2 channel serial input/output chip, such as the Z80 SIO/2 manufactured by Zilog Corporation, among others (see Fig. 9). From the modem interface 66, the digital data signals are passed to a modem 44, which will be discussed in greater detail. The modem 44 supplies the data signals to the cross-point matrix 50. Signals from the telephone line 24a or 24b carrying digital information are passed in the reverse order as outlined hereinabove, i.e., from the telephone line interface 30 through the cross-point matrix 50, through the modem 44, through the modem interface 66, etc.

A tone detection circuit 68 is also connected to the cross-point matrix 50 and supplies its output to the input/output interface 64. A DTMF (Dual Tone Multi-Frequency) generator 70, which generates the tones for Touch-Tone (a trademark of AT&T) operation, is under the control of the input/output interface 64. The DTMF generator 70 is also connected to the cross-point matrix 50.

A telephony control 52, which is under the control of the input/output interface 64, controls the operation of the cross-point matrix 50, the microphone interface 42, the speaker interface 38, the hand set interface 34, the tone detection circuit 68, the DTMF generator 70, and the modem 44.

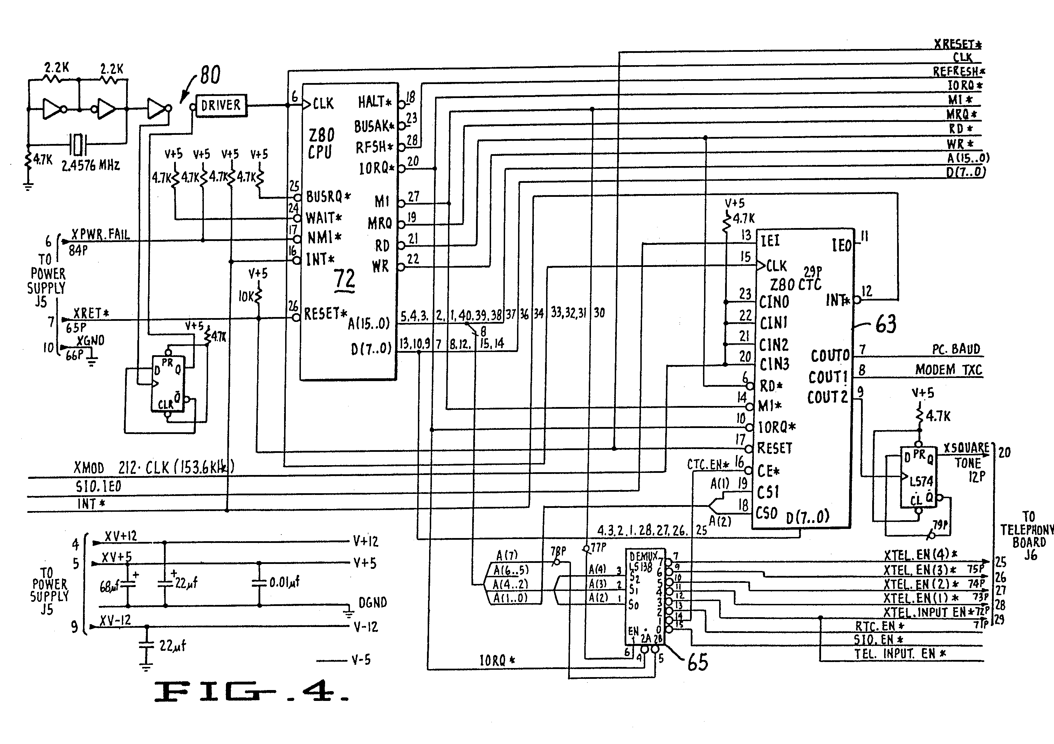

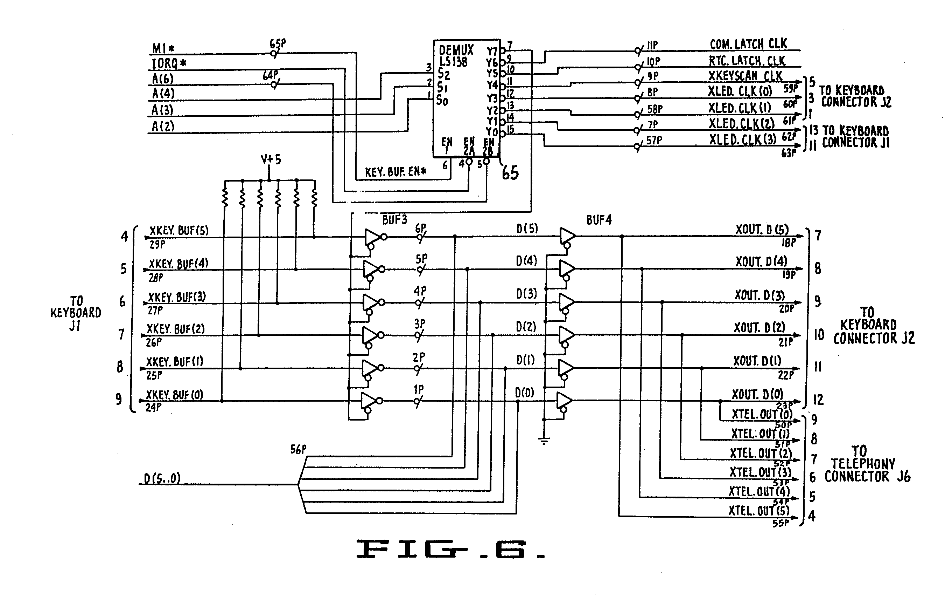

The input/output interface 64 is under the control of a CPU 72 and is shown in greater detail in part in Fig. 4. The interface 64 comprises a Z80 CTC 63 (from Zilog Corporation) and two LS 138 Demux 65 (shown in Figs. 4 & 6). The Demux 65 is an LS 138 and is available from a number of sources, one of which is Texas Instruments. One Demux 65 serves to interface with the keyboard 86 (see Fig. 6), while the other interfaces with the telephony functions. The CPU 72 is a microprocessor Z-80 manufactured by Zilog Corporation, among others. The CPU 72 is connected to a ROM memory 74, a RAM memory 76 and a CMOS-type RAM memory 78. A counter timer and master clock 80 supplies clock pulses to the CPU 72 and to the input/output interface 64. A battery backup 82 is supplied to the CMOS RAM 78 and provides power for the memory 78 in the event of power failure. A real time clock 84 also supplies clock pulses to the input/output interface 64. The battery backup 82 also supplies power to the real time clock 84. A keyboard 86 and a plurality of lights (LED indicators) 88 are interfaced with the input/output interface 64. Finally, a power supply 90 supplies power to the necessary parts of the apparatus 10.

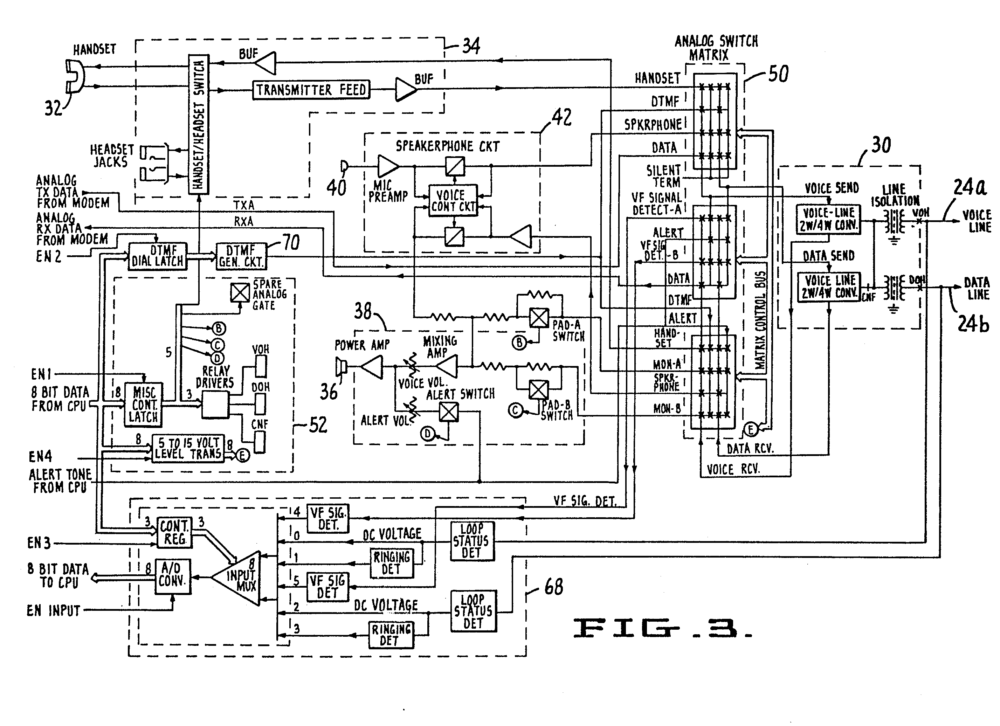

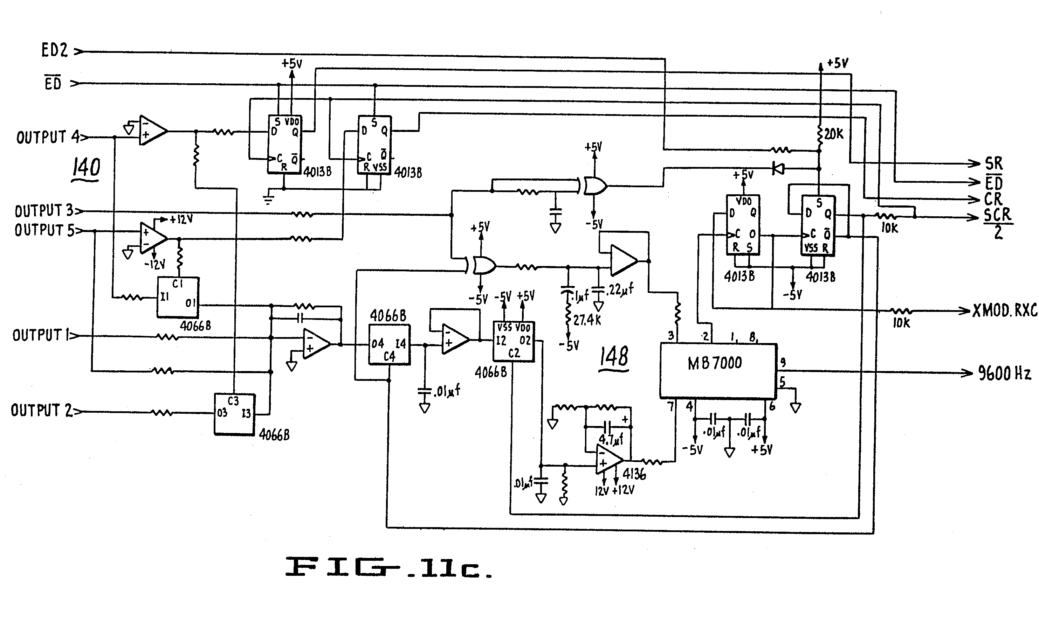

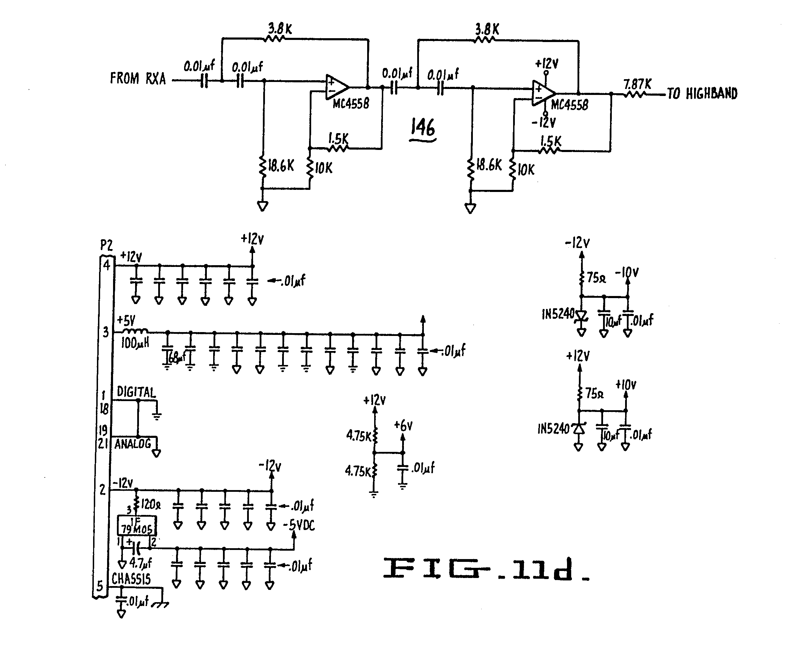

Referring to Fig. 3, there is shown a block diagram, in a greater detail, of a portion of the apparatus 10, shown in Fig. 2. Telephone lines interface 30 is shown as comprising a line isolation transformer 31 and a 2W/4W converter 33. This is shown in greater detail in Fig. 12. The cross-point matrix 50 comprises three switches, manufactured by Motorola Corporation designated as MC 142100. The switches 50 switch the inter-connection of the various components of the apparatus 10 to the telephone lines 24a and/or 24b. The microphone interface 42, the speaker interface 38, the hand set interface 34, are shown in greater detail, in Fig. 3. These comprise well-known standard parts and are well-known to those skilled in the art. The telephony control 52 comprises a plurality of digital voltage level shifters. As can be seen, the control to the cross-point matrix 50 comprises a level shifter from 5 volts to 15 volts. The signal from the input/output interface 64 of the CPU 72 is shifted to a higher voltage in order to control the cross-point matrix 50. Other level shifters switch the digital input/output interface 64 to the appropriate voltage level to control the hand set interface 34, speaker interface 38, speakerphone interface 42, etc.

The DTMF generator 70 is a component MK 5089 manufactured by Mostek. The tone detection circuit 68 is of the type described in a co-pending patent application filed on August 5, 1983 and is incorporated herein by reference.

Referring to Figs 4 through 9, there is shown detail circuit diagrams of the digital portion 100 of the apparatus 10. The digital portion 100 comprises the serial input/output 62, the modem interface 66, the input/output interface 64, the CPU 72, the real time clock 84, the CMOS RAM 78, the RAM 76, the ROM 74 and the counter-timer and master clock 80.

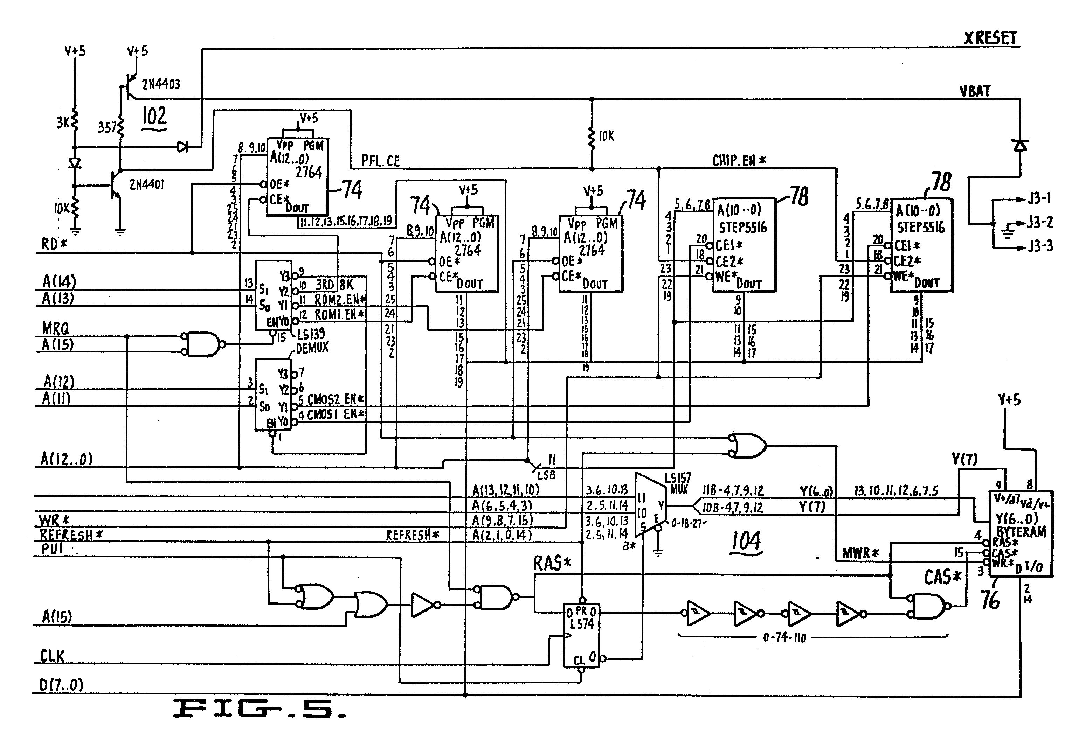

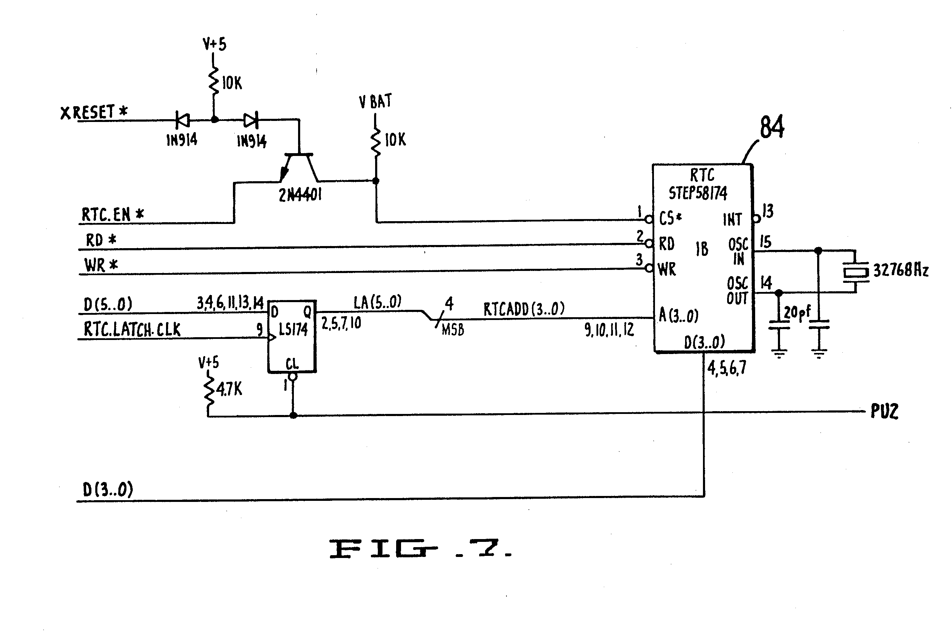

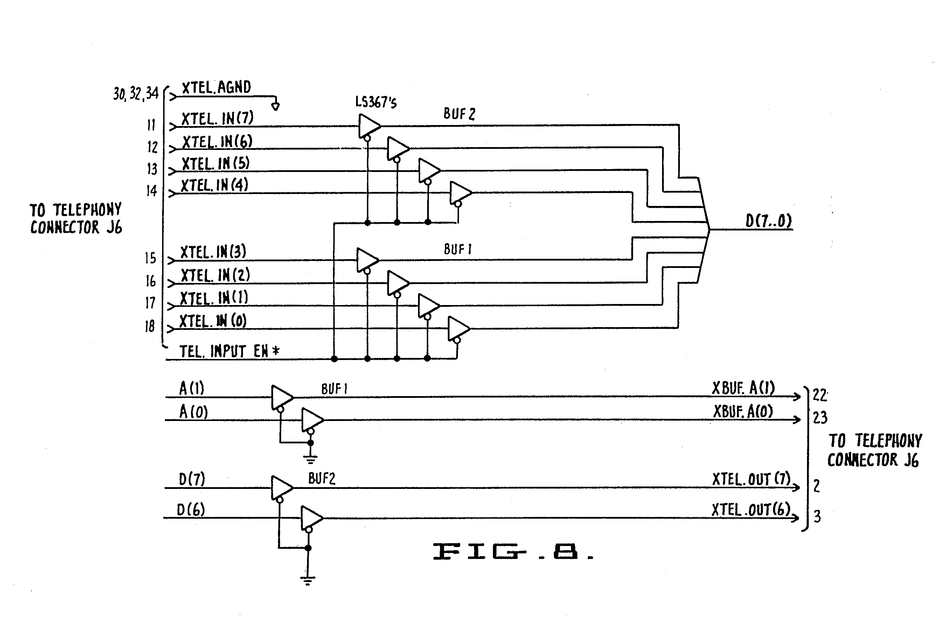

Fig. 4 shows the master oscillator clock 80 supplying the clock signal to the CPU 72. The Z80 CTC 63, which is a part of the interface 64, is a timing circuit and is a generator for the baud rate. Fig. 5 shows a power failure circuit 102, along with the ROM's 74 and the CMOS RAM 78. An array of 64K RAM is shown as 76. The timing circuit 104 control the dynamic RAM 76. In Fig. 6, the input/output decoder 65, which is a LS138, is shown. The decoder 65 is a part of the interface 64. A plurality of buffers 106 are also shown. In Fig. 7, the real time master clock 84 is shown. Fig. 8 discloses some more buffers. Fig. 9 shows the Z80 SIO/2, which is the modem interface 66 and the serial input/output 62.

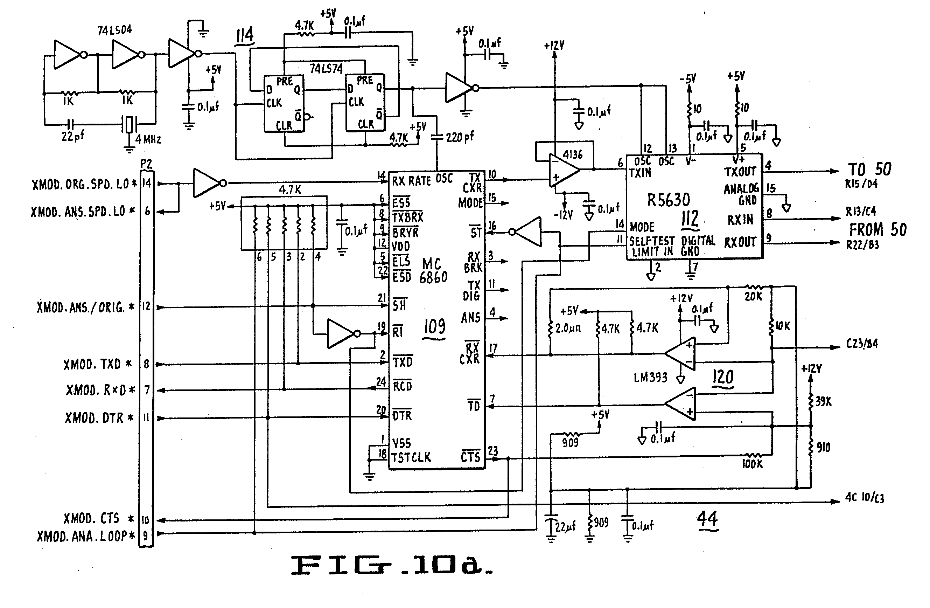

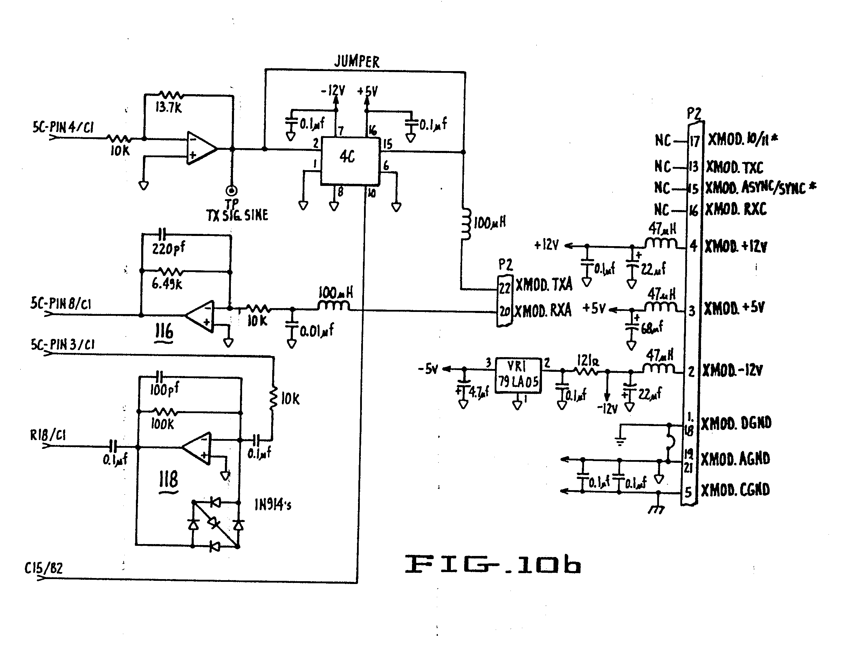

Figs. 10a and 10b discloses a type of modem 44, known as the Bell 103a type, which can be used in the apparatus 10 of the present invention. The modem 44 can transmit at the rate of 300 baud in a frequency shift mode, commonly known as FSK. In the modem 44, the modem comprises a single chip modem 109 which is a part designated as MC6860, and is available from Motorola Corporation. The stepped output signal from the MC6860 109 is passed through a filter 112. From the filter 112, the analog signal is passed to the cross-point matrix 50. A frequency generator 114 generates a high speed dock from which the carrier frequency from the MC6860 109 is modulated. The high speed dock from the frequency generator 114 is supplied to the filter 112.

The signal from the cross-point matrix 50 from the modem of the other apparatus is received by the modem 44 and is passed through an amplifier 116. The signal, having passed through the amplifier 116 is then passed through the filter 112 from which the carrier signal of the other modem is subtracted. The signal from the filter 112 is then passed through a circuit 118 to shape the waveform. The signal, having been shaped by the shaper 118, is then supplied to an energy level detector 120 and is then further shaped before being supplied to the MC6860 109. The MC6860 109 then converts the analog signal into a digital form and passes that signal to the modem interface 66 and, ultimately, to the computer 72.

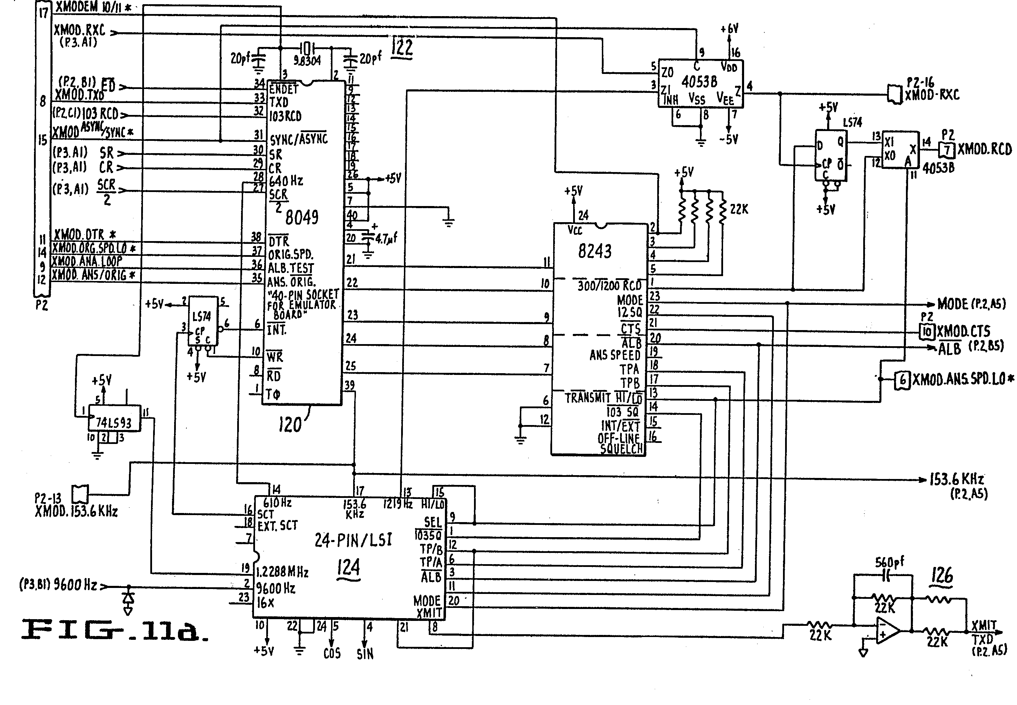

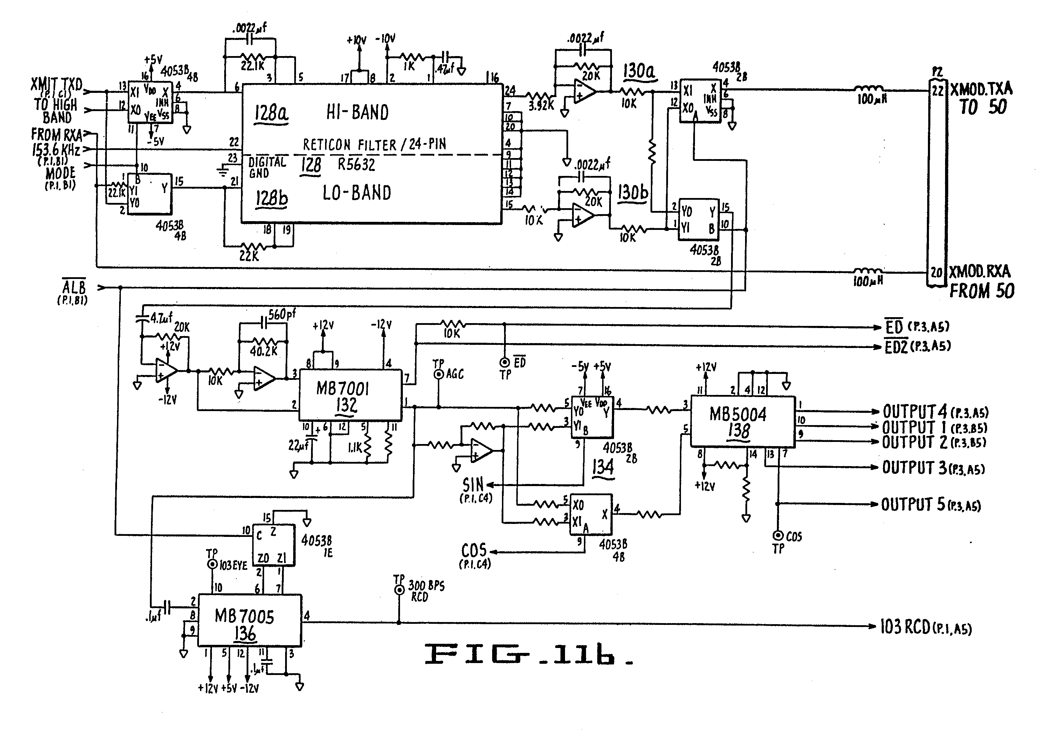

Referring to Figs. 11a-11d, there is shown a circuit diagram of another type of modem 144 which can be used in the apparatus 10 of the present invention. The modem 144, shown in Figs. 11a-11d, is of the type known as Bell 212a. The Bell 212a can transmit and receive at the rate of 1200 baud or 300 baud, depending on the selection. The modem 144, when transmitting and receiving in the 1200 baud mode, is transmitting in a format known as phase shift format, or PSK. As previously discussed, for a 300 baud modem, the transmission is in the FSK format.

The modem 144 comprises a single chip microcomputer with resident ROM 120. The microcomputer 120 comprises an Intel part No. 8049. A master clock 122 controls the timing of the microcomputer 120. The microcomputer 120 also contains approximately 2K of ROM memory. The program for this ROM memory is set forth in Exhibit A.

The digital signal from the microcomputer 120 is then supplied to a modulator 124. The modulator 124 is a Microbaud Part No. MB4364. The output of the modulator is a modulated square wave, either of the PSK type or the FSK type depending on the selection. From the modulator 124, the signal is amplified by amplifier 126.  From the amplifier 126, the signal is passed
through a filter 128.  The filter 128 has a high band
128a and a low band 128b.  The high band is used when
the apparatus 10 is the answering party and is
transmitting the signal.  The low band 128b is used
when the apparatus 10 is the originating party and is
transmitting the data.  From the filter 128, the
signals are shaped by the shapers 130a and 130b,
respectively, and are then sent to the cross-point
matrix 50.

When a signal is received from the cross-point
matrix 50, the signal is first passed through the
filter 128 again.  If the apparatus 10 is the originating party, the received signal is passed through the
high band 128a.  If the apparatus 10 is the answer
party, the received signal is passed through the low
band 128b.  The received signals that have been
filtered by filter 128 are again shaped by shapers 130a
and 130b, respectively.  The shaped received signals
are then passed through an energy level detector 132,
comprising in part a part designated as MB7001 available from Microbaud.  From the energy level detector
132, the signal is either passed through the demodula-
tor 136 or the demodulator 134.  The demodulator 136 is
a part available from Microbaud and is designated as
MB7005.  The demodulator 136 demodulates the signal if
it is of the FSK type.  From the demodulator 136, the
demodulated FSK signal is then passed to the
microcomputer 120.

The demodulator 134 demodulates the signal if it
is of the PSK type.  From the demodulator 134, the
signal is passed through a low pass filter 138.  From
the low pass filter 138 (MB5004 from Microbaud), the
signal is supplied to a circuit 140, which is a
sampling point circuit.  A circuit 142 then extracts
the digital timed sample.  The output of the circuit 142 is either "1" or "0". A phase lock loop 148 extracts a reference carrier from the received signal. The digitally timed samples are then passed onto microcomputer 120.

Finally, shown in Fig. 11d is a group delay equalizer 146, which is used in the high band filter 128a. The group delay equalizer equalizes the arrival time of all the signals in the high band section 128a of filter 128.

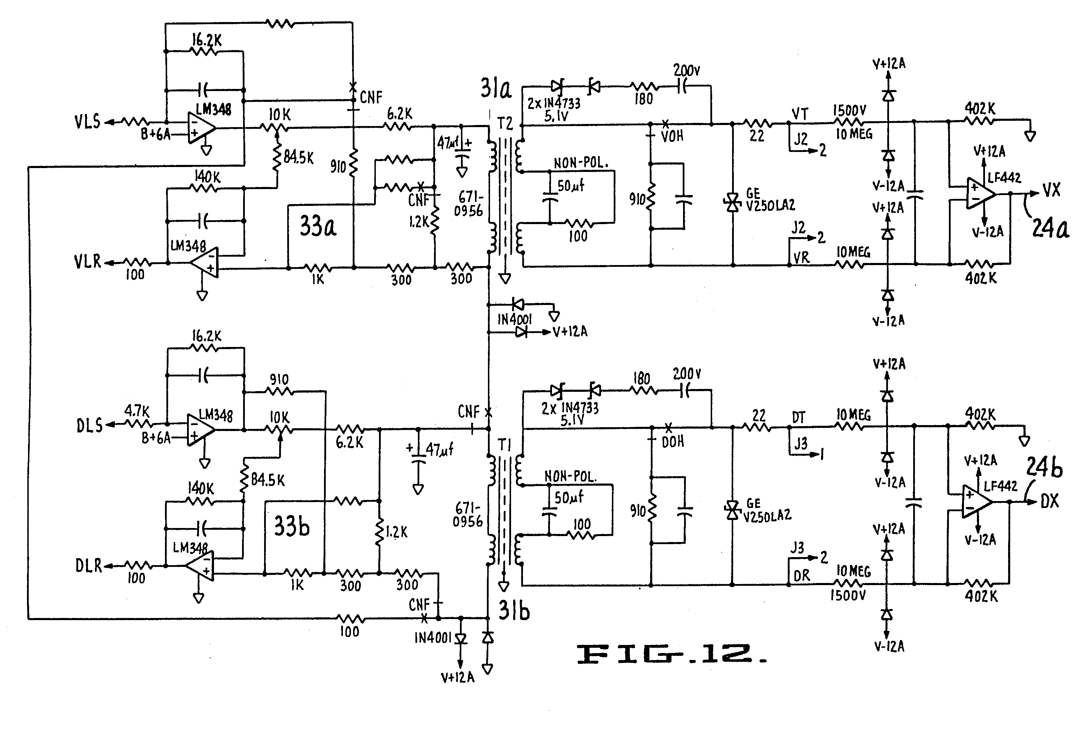

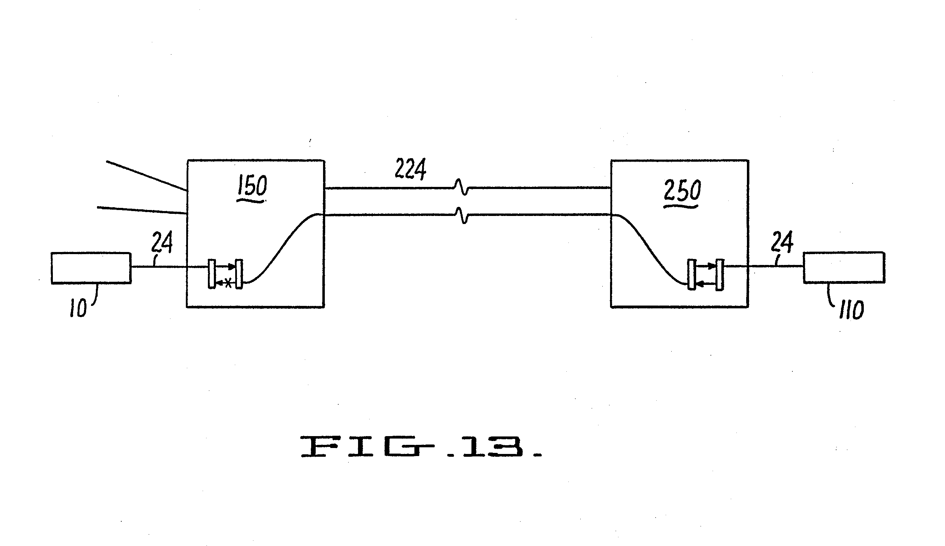

The operation of the apparatus 10 in the present invention will now be explained with reference to Fig. 13. Fig. 13 shows the apparatus 10 of the present invention connected to a PBX 150, which, in turn, is connected to the central office telephone lines 224. At the other end is another PBX 250. Connected thereto is a like apparatus 110. The invention will first be described with regard to transmission and receiving of digital information between apparatus 10 and like apparatus 110, subject to 1) unilateral interruption signal at only one apparatus and 2) interruption signal to both apparatuses.

Communication Between Like Apparatuses,
Subject To Unilateral Interruption

In this example, the apparatus 10 is communicating with a like apparatus 110, as shown in Fig. 13 through a PBX 150. The apparatus 10 can be the originating party or it can be the answering party. In the course of the communication betwen the apparatus 10 and the like apparatus 110, the PBX 150 inserts a "camp-on" tone or a "call waiting" tone to the apparatus 10. However, the like apparatus 110 does not receive the interrupt signal. If we assume that the signal is of sufficient duration, e.g., greater than one second, such that the normal prior art recovery techniques would be inapplicable, then the apparatus 10 would proceed as follows.

The CPU 72 would first determine that the interruption or the loss in the detection of the carrier signal from the like apparatus 110 is of sufficiently long period of duration. The software to accomplish this is shown in Exhibit 2. When the CPU 72 has decided that the loss in the carrier signal is of sufficiently long period of time, it instructs the cross-point matrix 50 to switch the telephone line 24 from being connected to the modem 44 to being connected to an open position. In the open position, the telephone line 24 is not connected to either the modem 44 or any of the telephony apparatuses, such as microphone 40 or the handset 32. The cross-point matrix 50 is then maintained in this position for more than one second, after which the CPU 72 instructs the cross-point matrix 50 to switch back into the first position in which position the modem 44 is connected again to the PBX 150. The software to accomplish this is set forth in Exhibit 3.

During the waiting period of greater than one second in which the communication line 24 is not connected to any source of energy within the apparatus 10, the other like apparatus 110 would also detect a loss in the carrier signal from the like apparatus 10. Since the one second is greater than the error recovery technique of the prior art which is built into the modem, the other like apparatus 110 would perform the similar steps of switching the cross-point matrix such that the telephone line 24 is connected to an open position in the cross-point matrix 50; waiting a predetermined period of time of greater than one second, and then reconnecting it to the modem 44.

After both apparatuses 10 and 110 have performed the like operations, each would be back to its original state as if one station has placed a call to the other station. Thus, if apparatus 10 were the originating party, the like apparatus 110 would transmit its carrier signal to the apparatus 10 acknowledging the placement of the call. The apparatus 10 would then transmit to the other apparatus 110 its acknowledgment signal of having received the first carrier signal. This "handshake" is completed and the apparatuses 10 and 110 can continue the communication of digital information. Although the communication is resumed, the previously transmitted digital information could, of course, be garbled or have error. The software in the computer system 20, which is attached to the apparatus 10 or like apparatus 110 can rectified those situations. The essence of the present invention is, therefore, that even interruptions of a sufficiently long period of time can be tolerated and that communication can be resumed in the single session, without requiring either station to re-place the call.

## Bilateral Interruption

In this example, an interruption occurs in the central office telephone line 224, which disturbs both the apparatus 10 and the like apparatus 110. Similar to the discussion stated heretofore, the apparatus 10 and the like apparatus 110 would each cause its respective cross-point matrix switch to switch the telephone line 24 from being connected to the modem 44 to being connected to an open position. The apparatuses 10 and 110 then waits a sufficiently long period of time, e.g., one second, then reconnects the modem 44 to the telephone line 24. The stations would then resume the "handshake" procedure and communication will then be maintained in the same session.

The operation of apparatus 10 of the present invention with a non-like digital apparatus will now be described. The operation will be described with respect to three cases: 1) where the interrupt occurs and is detected by both stations; 2) where the interrupt occurs and is detected only by the apparatus 10; and 3) where the interrupt occurs at the other non-like apparatus.

Interruptions At Both Stations

In this example, the interrupt occurs and is detected by both stations. If the interrupt signal is of sufficiently long period of time and the non-like apparatus cannot recover from such an interruption, then it disconnects itself from the communication line 224. In this event, the communication cannot be maintained in the same session.

Interruption At The Non-Like Apparatus

In this example, similar to the above example, if the non-like apparatus cannot recover from an interrupt signal of sufficiently long period of time, then like the prior art devices, it will disconnect itself from the communication line 224. In that event, the session cannot be resumed and the parties must re-place the call.

Interruption At the Apparatus 10

In this event, an interrupt signal occurs which is detectable only by the apparatus 10. Examples of this type of interrupt are the "camp-on" and "call waiting" signals generated by a PBX to which the apparatus 10 is connected. Applicants believe that it may be possible to resume digital communication in this mode between the stations. Applicants do not know of all the possible types of non-like apparatuses. However, if the non-like apparatus has the characteristics as set forth hereinbelow, then an interrupt of this type can still be tolerated and digital communication can resumed.

If the interrupt signal occurs at the like apparatus 10, then, according to the discussions hereinabove, the communication line 24 is switched to an open position in the switch 50. The apparatus 10 waits for a period of time greater than one second and then reconnects the modem 44 to the telephone line 24. If, during this period of time, i.e., the loss of carrier signal from the apparatus 10 is ignored by the non-like apparatus, and the non-like apparatus continues to transmit its carrier signal and data, then it is possible for the communication to resume.

When the apparatus 10 resumes the connection between the modem 44 and the telephone line 24, the apparatus 10, if it is the originating party, looks for an FSK type carrier signal from the non-like apparatus. If the other non-like apparatus is generating FSK type signal, then the apparatus 10, as the originating party, would send an acknowledgment by generating a FSK signal. The communication is then resumed. If, however, the carrier signal from the non-like apparatus is of the PSK type, then the apparatus 10 would terminate the communication.

Similarly, if the apparatus 10 were the answering party, after the apparatus 10 has reconnected its modem 44 to the communication medium 24, it transmits an FSK carrier signal to the non-like apparatus, to initiate the "handshake". If the acknowledgment for the non-like apparatus is PSK, then the apparatus 10 would respond by generating a PSK signal. If the response from the non-like apparatus is FSK, then the apparatus 10 would resume its FSK carrier signal transmission.

The requirement that the apparatus 10 look for an FSK signal when it is an originating party to resume the "handshake" is that the "handshake" protocol requires it. In the "handshake" protocol, the answering party first generates an FSK signal to the originating party. The originating party then transmits either an FSK or a PSK signal to the answering party. If the answering party receives an FSK signal from the originating party, then the answering party continues its transmission of FSK signal. On the other hand, if the answering party receives a PSK signal, then the answering party would change to a PSK transmission.

The theory of the operation of the present invention can be understood as follows. With the prior art techniques, to overcome problems of electrical noise and like interrupt signals in the communication medium, the apparatuses have attempted to use sophisticated devices to detect or discern the type of energy being received by it. A pre-requisite of this is that energy must be continuously transmitted from the other party. The receiving party then uses sophisticated techniques to detect whether it is noise or true data.

In contrast, in the method and apparatus of the present invention, the apparatus stops transmitting any energy which is detectable by the like apparatus as a carrier signal. The cessation in the carrier signal, however, does not automatically terminate the connection to the communication medium. Rather, it causes the like apparatus to similarly cease its transmission and to switch to a quiescent state. Once the two stations have "quieted down", then the "handshake" protocol can resume. Thus, the apparatus 10 does not attempt to discern the type of interrupt signal received by it. Rather, it simply ceases transmission of any type of energy which is detectable by the like apparatus as a carrier signal.

In the simplest embodiment as set forth herein, the quiescence is achieved by temporarily switching the telephone lines from being connected to the modem to being connected to an open position in which no energy is impressed onto telephone line 24. In the broadest sense, however, the invention is directed towards the computer 72, controlling the modem 44, such that it ceases any type of transmission of energy which is detectable by the like apparatus as a carrier signal for a temporary period of time. This can include switching the telephone line to an open position in which no energy is on the line or it can also include transmission of energy to the like apparatus which is not detectable by the like apparatus as a carrier signal. Typically modems transmit and receive carrier signals at two bands: approximately 1200 Hz and 2400 Hz with side bands respectively. In the apparatus of the present invention the two bands are: between approximately 400 Hz and 1750 Hz, and between approximately 1750 Hz and 4000 Hz. Thus, if signal of low energy level and out of the frequency range, e.g. 300 Hz, were transmitted, it would not be detectable by the like apparatus and, therefore, to the like apparatus, it is as if the apparatus had connected the telephone line 24 to an open position in a switch. Thus, transmission of energy not detectable by the like apparatus as a carrier signal during the quiescent period is within the scope of this invention.

Claims

1.    An apparatus for maintaining digital communication in a single session with another digital apparatus, via a communication medium, said apparatus having modem means for transmitting and receiving data signals to and from said another digital apparatus, said modem means for receiving data signals on a first carrier signal, said modem means having means for detecting said first carrier signal; and said modem means for transmitting date signals on a second carrier signal to said another digital apparatus; said apparatus subject to an interrupt signal causing a cessation in the detection of said first carrier signal; wherein said improvement comprising:

        means for suppressing said modem means from transmitting energy to said another digital apparatus, wherein said energy being detectable by said another digital apparatus as a second carrier signal; and

        computer control means for receiving said first carrier signal; for controlling said modem and said suppressing means said computer control means for automatically activating said suppressing means upon the detection of a cessation in said first carrier signal; to wait a predetermined period of time; to deactivate said suppressing means; and for causing said modem means to transmit said second carrier signal to re-establish communication.

2.    The apparatus of Claim 1, wherein said suppressing means is a switch means interposed between said communication medium and said modem means; said switch means being adapted to connect said medium in a first position and in a second position, wherein in said first position said medium is connected to said modem; and wherein in said second position, said medium is connected to an open position in said switch means; and

wherein said computer control means switches said switch means to said second position upon the detection of a cessation in the first carrier signal and to switch back to said first position after said period of time.

3.    The apparatus of Claim 2, wherein said period of time is greater than one (1) second.

4.    The apparatus of Claim 1, wherein said suppressing means is means for generating a signal below approximately 400 Hz.

5. A method for maintaining digital communication, by an apparatus, with another digital apparatus, via a communication medium, in a single session, said apparatus having modem means for transmitting and receiving data signals to and from said another digital apparatus, said modem means for receiving data signals on a first carrier signal; and said modern means for transmitting data signals on a second carrier signal, said method comprising

detecting a cessation in the first carrier signal;

suppressing the transmission of signals detectable by said another digital apparatus as a second carrier signal;

waiting a predetermined period of time; and

transmitting said second carrier signal to said another digital apparatus to resume communication.

6. The method of Claim 5, wherein said suppressing step comprising:

switching said medium from being connected to said modem to being connected to an open position; and

said method further comprising

switching said medium from being connected to an open position to being connected to said modem;

after said waiting step.

7.   A system for maintaining digital communication between an apparatus and a like apparatus via a communication medium, in a single session, each of said apparatuses comprising:

modem means for transmitting data signals to the other like apparatus on a carrier signal and for receiving data signals transmitted from the other like apparatus on a different carrier signal;

means for detecting said different carrier signal;

means for suppressing said modem means from transmitting energy to said like apparatus, wherein said energy being detectable by said like apparatus as a carrier signal; and

computer control means for receiving said detected different carrier signal; for controlling said modem and said suppressing means; said computer control means for automatically activating said suppressing means upon the detection of a cessation in said different carrier signal; to wait a predetermined period of time; to deactivate said suppressing means, and for causing said modem means to transmit said carrier signal to the other like apparatus to resume communication.

8. The apparatus of Claim 7, wherein said suppressing means is a switch means interposed between said communication medium and said modem means; said switch means being adapted to connect said medium in a first position and in a second position, wherein in said first position said medium is connected to said modem; and wherein in said second position, said medium is connected to an open position in said switch means; and

wherein said computer control means switches said switch means to said second position upon the detection of a cessation in the first carrier signal and to switch back to said first position after said period of time.

9. The apparatus of Claim 8, wherein said period of time is greater than one (1) second.

10. The apparatus of Claim 7, wherein said suppressing means is means for generating a signal below approximately 400 Hz.

FIG.1.

FIG. 2.

FIG.3.

0144042

FIG. 4.

FIG.5.

5/17

0144042

FIG.6.

FIG.7.

FIG.8.

0144042

FIG.9.

**FIG. 10a.**

FIG.10b

FIG. 11a.

FIG. 11b.

FIG.11c.

14/17

0144042

FIG.11d.

15/17

FIG.12.

FIG.13.

0144042